# EUROPEAN PATENT SPECIFICATION

(11) **EP 2 749 601 B1**
(45) Date of publication and mention of the grant of the patent: **06.04.2016**
(21) Application number: 13199059.0
(22) Date of filing: 20.12.2013
(51) Int. Cl.: C08L 69/00, H04N 5/64

(54) **TELEVISION HOUSING AND METHOD OF FABRICATING THE SAME**
FERNSEHGEHÄUSE UND HERSTELLUNGSVERFAHREN DAFÜR
BOÎTIER DE TÉLÉVISION ET SON PROCÉDÉ DE FABRICATION

(30) Priority: 28.12.2012 KR 20120157669
(43) Date of publication of application: 02.07.2014
(73) Proprietor: Cheil Industries Inc., Gumi-si, Gyeongsangbuk-do 730-710 (KR)
(72) Inventor: Lee, Jo Won, Gyeonggi-do (KR); Chin, Kyuong Sik, Gyeonggi-do (KR); Kim, Ji Yea, Gyeonggi-do (KR); Park, Sang Ki, Gyeonggi-do (KR); Shin, Seung Shik, Gyeonggi-do (KR)
(74) Representative: Lang, Johannes

(56) References cited:
- WO-A1-2012/169631
- WO-A2-2007/075780
- DATABASE WPI Week 200767 Thomson Scientific, London, GB; AN 2007-711608 XP002722695, & JP 2007 154093 A (TEIJIN KASEI LTD) 21 June 2007 (2007-06-21)
- DATABASE WPI Week 200670 Thomson Scientific, London, GB; AN 2006-673106 XP002722696, & JP 2006 240085 A (KONO SANGYO KK) 14 September 2006 (2006-09-14)

## Description

The present invention relates to a television housing and a method of fabricating the same. More particularly, the present invention relates to a television housing, which employs bondable glass fibers and thus can prevent whitening due to an ejector pin upon release at high temperatures, and to a method of fabricating the same.

A blend (PC/ABS) of polycarbonate (PC) and ABS resins is generally used for exterior materials of electronic products requiring high gloss, high flowability, high impact resistance, and the like. However, since a blend including only such PC/ABS exhibits poor stiffness and dimensional stability, a reinforced material in which PC/ABS is reinforced with glass fiber has been developed (for example, Korean Patent Publication No. 10-2009-0092833A, No. 10-20030015680A, and the like). JP2007154093 A discloses a resin composition for fixed frame of flat panel display, which composition contains a thermoplastic resin containing aromatic polycarbonate resin and a specific glass fiber.

In this way, a glass fiber-reinforced PC/ABS resin is used in products requiring dimensional stability and high stiffness, and is also widely used for internal components of electric/electronic products due to excellent flame retardancy thereof. However, since such a glass fiber-reinforced resin exhibits low quality of external appearance, it is difficult to apply the glass fiber-reinforced resin to an exterior component of electric/electronic products, such as a television housing, and the like. For example, when a television housing formed of such a glass fiber-reinforced PC/ABS resin is released during molding at a temperature of about 30°C or more, there is a possibility of whitening due to an ejector pin. Such a problem acts as a limit in extending applications of the glass fiber-reinforced PC/ABS.

Therefore, there is a need for a television housing using glass fiber-reinforced PC/ABS, which exhibits excellent external appearance and can prevent whitening upon release at high temperature while maintaining excellent flame retardancy, dimensional stability, and stiffness.

It is the object of the present invention to provide a television housing, which exhibits excellent properties in terms of flame retardancy, dimensional stability, stiffness and external appearance, and can prevent whitening due to an ejector pin upon release at high temperature, and a method of fabricating the same.

This object has been achieved by the provision of a television housing including: a stainless steel (SUS) frame; and a plastic member adjoining at least one surface of the stainless steel frame, wherein the plastic member includes:
a base resin including 60% by weight (wt%) to 95 wt% of (A) a polycarbonate resin; and 5 wt% to 40 wt% of (B) a rubber-modified aromatic vinyl graft copolymer resin; wherein the plastic member further includes 5 parts by weight to 25 parts by weight of (C) bondable glass fibers, based on 100 parts by weight of the base resin of the (A) polycarbonate resin and the (B) rubber-modified aromatic vinyl graft copolymer resin, and has a tensile strength from 70 MPa to 130 MPa at 23°C.

In one embodiment, the plastic member may be molded by a steam molding process.

In one embodiment, the steam molding process may be rapid heat cycle molding (RHCM).

In one embodiment, the bondable glass fibers may be coated with a resin including at least one of epoxy, urethane, and silane resins.

In one embodiment, the plastic member may further include at least one of a phosphorus flame retardant and a halogen flame retardant.

In one embodiment, the plastic member may further include at least one of impact reinforcing agents, anti-dripping agents, antimicrobials, heat stabilizers, antioxidants, release agents, light stabilizers, inorganic additives, surfactants, plasticizers, lubricants, antistatic agents, and colorants.

Another aspect of the present invention relates to a method of fabricating a television housing. The method includes: preparing a plastic member by injection of (A) a polycarbonate resin, (B) a rubber-modified aromatic vinyl graft copolymer resin and (C) bondable glass fibers into a mold in a steam molding process, followed by releasing the plastic member at 30°C to 90°C; and coupling the plastic member to a stainless steel (SUS) frame.

In one embodiment, the plastic member may have a tensile strength from 70 MPa to 130 MPa at 23°C.

In one embodiment, the steam molding process may be rapid heat cycle molding (RHCM).

The above and other aspects, features and advantages of the invention will become apparent from the following description of embodiments given in conjunction with the accompanying drawing, in which:

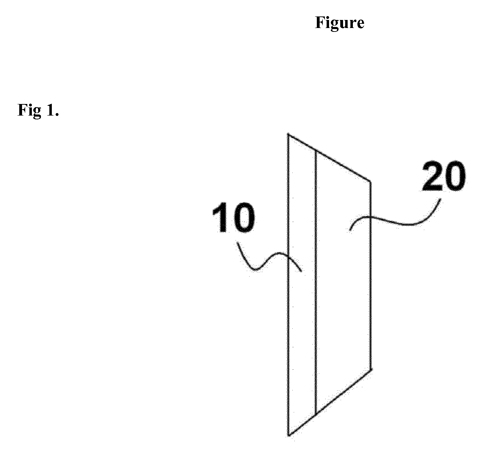

Fig. 1 is a sectional view of a television housing according to one embodiment of the present invention.

Hereinafter, embodiments of the present invention will be described in detail with reference to the accompanying drawings.

The present invention will become apparent with reference to the accompanying drawings. In the drawings, the sizes of components may be exaggerated for clarity, without being limited thereto.

Fig. 1 is a sectional view of a television housing according to one embodiment of the present invention. Referring to Fig. 1, the television housing according to one embodiment of the invention includes: a stainless steel (SUS) frame 10; and a plastic member 20 adjoining at least one surface of the stainless steel frame 10.

The stainless steel frame 10 and the plastic member 20 may have various shapes, without being limited to the drawing. However, at least one surface of the stainless steel frame 10 adjoins at least one surface of the plastic member 20. The adjoining structure may be realized by bonding, insertion or the like, without being limited thereto.

The stainless steel frame 10 may be a typical product which is applied to a television housing and is commercially available.

The plastic member 20 includes: (A) a polycarbonate resin; (B) a rubber-modified aromatic vinyl graft copolymer resin; and (C) bondable glass fibers, and has a tensile strength from 70 MPa to 130 MPa at 23°C.

### (A) Polycarbonate resin

The polycarbonate resin may be any typical polycarbonate resin without limitation. For example, the polycarbonate resin may be a polycarbonate resin prepared by reacting diphenols represented by Formula 1 with phosgene, halogen acid ester, carbonic acid ester, or mixtures thereof. In addition, at least two diphenols represented by Formula 1 may be combined to form a repeat unit of the polycarbonate resin. 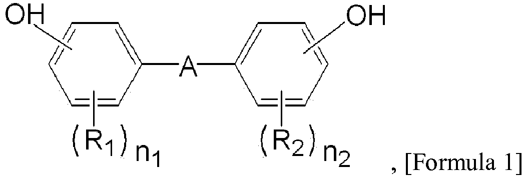 wherein A is a single bond, a substituted or unsubstituted C₁ to C₃₀ linear or branched alkylene group, a substituted or unsubstituted C₂ to C₅ alkenylene group, a substituted or unsubstituted C₂ to C₅ alkylidene group, a substituted or unsubstituted C₁ to C₃₀ linear or branched haloalkylene group, a substituted or unsubstituted C₅ to C₆ cycloalkylene group, a substituted or unsubstituted C₅ to C₆ cycloalkenylene group, a substituted or unsubstituted C₅ to C₁₀ cycloalkylidene group, a substituted or unsubstituted C₆ to C₃₀ arylene group, a substituted or unsubstituted C₁ to C₂₀ linear or branched alkoxylene group, a halogen acid ester group, a carbonic acid ester group, CO, S, or SO₂; R₁ and R₂ are each independently a substituted or unsubstituted C₁ to C₃₀ alkyl group, or a substituted or unsubstituted C₆ to C₃₀ aryl group; and n₁ and n₂ are each independently an integer from 0 to 4.

Here, the term "substituted" means that a hydrogen atom is substituted with a substituent, such as a halogen atom, a hydroxyl group, a nitro group, a cyano group, an amino group, an azido group, an amidino group, a hydrazino group, a carbonyl group, a carbamyl group, a thiol group, an ester group, a carboxyl group or a salt thereof, a sulfonic acid group or a salt thereof, a phosphate group or a salt thereof, a C₁ to C₂₀ alkyl group, a C₂ to C₂₀ alkenyl group, a C₂ to C₂₀ alkynyl group, a C₁ to C₂₀ alkoxy group, a C₆ to C₃₀ aryl group, a C₆ to C₃₀ aryloxy group, a C₃ to C₃₀ cycloalkyl group, a C₃ to C₃₀ cycloalkenyl group, a C₃ to C₃₀ cycloalkynyl group, or combinations thereof.

Examples of diphenols may include hydroquinone, resorcinol, 4,4'-biphenol, 2,2-bis(4-hydroxyphenyl)propane (also referred to as 'bisphenol-A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, specifically 2,2-bis(4-hydroxyphenyl)propane.

The polycarbonate resin may have a weight average molecular weight (Mw) from 10,000 g/mol to 200,000 g/mol, for example, from 15,000 g/mol to 80,000 g/mol, without being limited thereto.

The polycarbonate resin may be a mixture of a copolymer prepared from at least two diphenols, and may be a linear or branched polycarbonate resin or a polyestercarbonate copolymer resin.

For example, the linear polycarbonate resin may be a bisphenol-A polycarbonate resin, or the like. For example, the branched polycarbonate resin may be prepared by reacting a polyfunctional aromatic compound, such as trimellitic anhydride, trimellitic acid, and the like with diphenols and carbonate. Here, the polyfunctional aromatic compound may be present in an amount of 0.05 mol% to 2 mol% based on the total amount of the branched polycarbonate resin. In addition, for example, the polyestercarbonate copolymer resin may be prepared by reacting a bifunctional carboxylic acid with diphenols and carbonates. Here, the carbonates may include diaryl carbonate such as diphenyl carbonate and the like, ethylene carbonate, and the like.

In one embodiment, the polycarbonate resin may have a melt index (MI) from 5 g/10 min to 120 g/10 min, as measured at 300°C under a load of 1.2 kg in accordance with ISO 1133. For example, the polycarbonate resin may be prepared by combination of at least two polycarbonates having different melt indexes. For example, the polycarbonate resin may be prepared by mixing 20 wt% to 60 wt% of a polycarbonate resin having a melt index from 5 g/10 min to 15 g/10 min, 20 wt% to 60 wt% of a polycarbonate resin having a melt index from 16 g/10 min to 50 g/10 min, and 40 wt% of a polycarbonate resin having a melt index from 51 g/10 min to 120 g/10 min. In this case, the plastic member can have excellent property balance.

The polycarbonate resin may be present in an amount of 60 wt% to 95 wt%, for example, 70 wt% to 90 wt% in the total weight of the (A)+(B) base resins in the plastic member. Within this range, the plastic member has excellent balance of impact strength, heat resistance, and processability.

### (B) Rubber-modified aromatic vinyl graft copolymer resin

The rubber-modified aromatic vinyl graft copolymer resin is a polymer, in which particles of a rubbery polymer are dispersed in a matrix (continuous phase) including an aromatic vinyl polymer and the like. For example, the rubber-modified aromatic vinyl graft copolymer resin may be polymerized by adding an aromatic vinyl monomer, and optionally, a monomer copolymerizable with the aromatic vinyl monomer, to the rubbery polymer. Examples of the rubber-modified aromatic vinyl graft copolymer resin may include acrylonitrile-butadiene-styrene copolymer resins (ABS resins), acrylonitrile-ethylene propylene rubber-styrene copolymer resins (AES resins), acrylonitrile-acrylic rubber-styrene copolymer resins (AAS resins), and the like, without being limited thereto.

Generally, the rubber-modified aromatic vinyl graft copolymer resin may be prepared by any polymerization method known in the art, such as emulsion polymerization, suspension polymerization, bulk polymerization, and the like. In addition, the rubber-modified aromatic vinyl graft copolymer resin may be typically prepared by extrusion of a mixture of a graft copolymer resin and a copolymer resin. Although the rubber-modified aromatic vinyl graft copolymer resin can be prepared only through a single process without separate preparation of the graft copolymer resin and the copolymer resin in bulk polymerization, the rubber particles (rubbery polymer) may be present in an amount of 5 wt% to 50 wt% in the final rubber-modified aromatic vinyl graft copolymer resin in any case. In addition, the rubber particles may have a Z-average particle size from 0.05 µm to 6.0 µm, without being limited thereto. Within this range, the plastic member can exhibit excellent properties, such as impact resistance, and the like.

In one embodiment, the rubber-modified aromatic vinyl graft copolymer resin (B) may include only (B1) a graft copolymer resin, or may be prepared using both (B1) a graft copolymer resin and (B2) a copolymer resin. When both (B1) and (B2) are used, it is desirable that (B1) and (B2) be blended in consideration of compatibility.

### (B1) Graft copolymer resin

The graft copolymer resin may be obtained by graft copolymerization of an aromatic vinyl monomer and a monomer copolymerizable with the aromatic vinyl monomer with a rubbery polymer. In addition, the graft copolymer resin may further include a monomer imparting processability and heat resistance, as needed.

Examples of the rubbery polymer may include: diene rubbers such as polybutadiene, isoprene, poly(styrene-butadiene), poly(acrylonitrile-butadiene) and the like, and saturated rubbers obtained by adding hydrogen to the diene rubbers; acrylic rubbers such as isoprene rubbers, polybutyl acrylic acid, and the like; ethylene-propylene-diene monomer terpolymers (EPDM); and the like. Among these materials, the rubbery polymer is preferably diene rubber, more preferably butadiene rubber. The rubbery polymer may be present in an amount of 5 wt% to 65 wt%, for example, 10 wt% to 60 wt%, specifically 20 wt% to 50 wt% in the total weight of the graft copolymer resin. Within this range, the plastic member can obtain excellent balance of impact strength and mechanical properties. The rubbery polymer (rubber particles) may have an average particle size (Z-average) from 0.1 µm to 6 µm, for example, from 0.15 µm to 4 µm, specifically from 0.25 µm to 3.5 µm. Within this range, the plastic member can exhibit excellent impact strength and external appearance.

The aromatic vinyl monomer is graft-copolymerizable with the rubbery polymer. Examples of the aromatic vinyl monomer may include styrene, α-methylstyrene, β-methylstyrene, p-methylstyrene, para-t-butylstyrene, ethylstyrene, vinylxylene, monochlorostyrene, dichlorostyrene, dibromostyrene, vinylnaphthalene, and the like, without being limited thereto. The aromatic vinyl monomer is preferably styrene. The aromatic vinyl monomer may be present in an amount of 34 wt% to 94 wt%, for example, 36 wt% to 80 wt%, specifically 40 wt% to 60 wt% in the total weight of the graft copolymer resin. Within this range, the plastic member can obtain excellent balance of impact strength and mechanical properties.

Examples of the monomer copolymerizable with the aromatic vinyl monomer may include vinyl cyanide compounds such as acrylonitrile and the like, unsaturated nitrile compounds such as ethacrylonitrile, methacrylonitrile, and the like. These may be used alone or in combination thereof. The monomer copolymerizable with the aromatic vinyl monomer may be present in an amount of 1 wt% to 30 wt%, for example, 4 wt% to 29 wt%, specifically 10 wt% to 28 wt% in the total weight of the graft copolymer resin. Within this range, the plastic member can obtain excellent balance of impact strength and mechanical properties.

Examples of the monomer imparting processability and heat resistance may include acrylic acid, methacrylic acid, maleic anhydride, N-substituted maleimide, and the like, without being limited thereto. The monomer imparting processability and heat resistance may be optionally present in an amount of 15 wt% or less, for example, 0.1 wt% to 10 wt% in the total weight of the graft copolymer resin. Within this range, the monomer can impart processability and heat resistance to the plastic member without deterioration of other properties.

### (B2) Copolymer resin

The copolymer resin may be prepared using a monomer mixture excluding the rubber (rubbery polymer) from the graft copolymer resin, and a ratio of the monomers may vary with compatibility and the like. For example, the copolymer resin may be obtained by copolymerization of the aromatic vinyl monomer and the monomer copolymerizable with the aromatic vinyl monomer. Examples of the aromatic vinyl monomer may include without limitation styrene, α-methylstyrene, β-methylstyrene, p-methylstyrene, para-t-butylstyrene, ethylstyrene, vinylxylene, monochlorostyrene, dichlorostyrene, dibromostyrene, vinylnaphthalene, and the like, and combinations thereof. In exemplary embodiments, the aromatic vinyl monomer can include styrene. Examples of the monomer copolymerizable with the aromatic vinyl monomer may include vinyl cyanide compounds such as acrylonitrile and the like, unsaturated nitrile compounds, such as ethacrylonitrile, methacrylonitrile, and the like. These may be used alone or in combination thereof.

In another embodiment, the copolymer resin may further include the monomer imparting processability and heat resistance, as needed. Examples of the monomer imparting processability and heat resistance may include acrylic acid, methacrylic acid, maleic anhydride, N-substituted maleimide, and the like, without being limited thereto.

In the copolymer resin, the aromatic vinyl monomer may be present in an amount of 60 wt% to 90 wt%, for example, 70 wt% to 80 wt% in the total weight of the copolymer resin. Within this range, the plastic member can obtain excellent balance of impact strength and mechanical properties.

The monomer copolymerizable with the aromatic vinyl monomer may be present in an amount of 10 wt% to 40 wt%, for example, 20 wt% to 30 wt% in the total weight of the copolymer resin. Within this range, the plastic member can obtain excellent balance of impact strength and mechanical properties.

In addition, the monomer imparting processability and heat resistance may be optionally present in an amount of 30 wt% or less, for example, 0.1 wt% to 20 wt% in the total weight of the copolymer resin. Within this range, the monomer can impart processability and heat resistance to the plastic member without deterioration of other properties.

In the rubber-modified aromatic vinyl graft copolymer resin (B), the graft copolymer resin (B1) may be present in an amount of 10 wt% to 100 wt%, for example, 15 wt% to 90 wt%, and the amount of the copolymer resin (B2) may be 0 wt% to 100 wt%, for example, 10 wt% to 85 wt%. Within this range, the plastic member can obtain excellent balance of impact strength and mechanical properties.

In one embodiment, in the rubber-modified aromatic vinyl graft copolymer resin, the graft copolymer resin may be present in an amount of 55 wt% to 90 wt%, for example, 60 wt% to 80 wt%, and the copolymer resin may be present in an amount of 10 wt% to 45 wt%, for example, 20 wt% to 40 wt%. Within this range, particularly, the plastic member can exhibit excellent impact resistance.

In another embodiment, in the rubber-modified aromatic vinyl graft copolymer resin, the graft copolymer resin may be present in an amount of 15 wt% to 50 wt%, for example, 20 wt% to 40 wt%, and the copolymer resin may be present in an amount of 50 wt% to 85 wt%, for example, 60 wt% to 80 wt%. Within this range, particularly, the plastic member can exhibit excellent stiffness and chemical resistance.

The rubber-modified aromatic vinyl graft copolymer resin may be present in an amount of 5 wt% to 40 wt%, for example, 5 wt% to 20 wt% in the total weight of the (A)+(B) base resins in the plastic member. Within this range, the plastic member can have excellent balance of impact strength, heat resistance, and processability.

### (C) Bondable glass fiber

The bondable glass fibers are glass fibers coated with a bondable organic material. The bondable glass fibers (C) exhibit strong bonding strength to the base resins (A) and (B), and thus can prevent the plastic member from whitening due to an ejector pin even when the plastic member is released at a high temperature of 30°C or more.

For example, the bondable glass fibers may be coated with a bondable organic material including epoxy, urethane, silane resins, a mixture thereof, and the like. Preferably, the bondable glass fibers are coated with an epoxy resin.

The glass fibers may have an entirely or partially coated surface. In one embodiment, coating may be performed by spray coating of 0.01 parts by weight to 1.0 part by weight of the bondable organic material based on 100 parts by weight of the glass fibers.

The epoxy resin may be a typical epoxy resin for fiber coating, which exhibits excellent properties in terms of fiber protection, strand integrity, wetting, and solubility. Examples of the epoxy resin may include epoxy (bisphenol A type), and the like, without being limited thereto.

The urethane resin may be a typical urethane resin for fiber coating, which exhibits excellent strand integrity, fiber forming capability, and the like. Examples of the urethane resin may include polypropylene glycol (PPG) and isophorone diisocyanate (IPDI) polyurethane, and the like, without being limited thereto.

The silane resin may be a typical silane resin for fiber coating, which exhibits excellent glass bonding properties. Examples of the silane resin may include 3-isocyanatopropyl triethoxysilane, and the like, without being limited thereto.

The bondable glass fibers may have an average length from 2 mm to 5 mm, and a diameter from 10 µm to 20 µm. Within this range, the bondable glass fibers can be easily introduced, exhibit excellent stiffness, and can be prevented from protruding from a surface of the plastic member.

The bondable glass fibers may have a circular or elliptical cross-section. In one embodiment, the bondable glass fibers may have a ratio (a/b) of (a) major diameter to (b) minor diameter from 1.0 to 1.2. Within this range, the bondable glass fibers can exhibit excellent dimensional stability.

The bondable glass fibers may be present in an amount of 5 parts by weight to 25 parts by weight, for example, 10 parts by weight to 20 parts by weight based on 100 parts by weight of the (A)+(B) base resins in the plastic resin. Within this content range of the bondable glass fibers, the plastic member can exhibit excellent stiffness, external appearance and the like, and prevent whitening upon release.

According to the invention, the plastic member may further include a flame retardant for improvement of flame retardancy.

The flame retardant may include phosphorus flame retardants, halogen flame retardants, and mixtures thereof, without being limited thereto. For example, the flame retardant may be a phosphorus flame retardant. The phosphorus flame retardant refers to a typical flame retardant containing phosphorus. Examples of the phosphorus flame retardant may include red phosphorus, phosphate, phosphonate, phosphinate, phosphine oxide, phosphazene, metallic salts thereof, and the like, without being limited thereto.

The flame retardant may be present in an amount of 5 parts by weight to 30 parts by weight, for example, 12 parts by weight to 20 parts by weight based on 100 parts by weight of the (A)+(B) base resins in the plastic resin. Within this range, the plastic member can exhibit excellent flame retardancy without deterioration of other properties.

In addition, the plastic member may further include at least one of typical additives such as impact reinforcing agents, anti-dripping agents, antimicrobials, heat stabilizers, antioxidants, release agents, light stabilizers, inorganic additives, surfactants, plasticizers, lubricants, antistatic agents, colorants, and the like, as needed.

According to the invention, the plastic member may have a tensile strength from 70 MPa to 130 MPa, for example, from 80 MPa to 120 MPa at 23°C, as measured on a tensile test specimen under conditions of 50 mm/min in accordance with ASTM D638. If the plastic member has a tensile strength of less than 70 MPa, the plastic member can suffer from whitening due to an ejector pin upon release, and if the plastic member has a tensile strength of greater than 130 MPa, the plastic member can suffer from failure upon release.

The plastic member may have a gloss of 95 or more, for example, from 95 to 100 as measured in accordance with ASTM D 2457, and a surface roughness (Ra) of 20 nm or less, for example, from 20 nm to 5 nm as measured in accordance with ASTM D 4417-B. In addition, since the plastic member exhibits excellent dimensional stability, the plastic member may have a coefficient of linear thermal expansion (α) of 40 µm/(m°C) or less, for example, from about 40 µm/(m°C) to about 30 µm/(m°C) as measured in accordance with ASTM D-696, and a shrinkage of 0.003 cm/cm or less, for example, from about 0.003 cm/cm to about 0.002 cm/cm as measured in accordance with ASTM C356.

Another aspect of the present invention relates to a method of fabricating a television housing. According to the invention, the method of fabricating a television housing includes: preparing a plastic member by injection of (A) a polycarbonate resin, (B) a rubber-modified aromatic vinyl graft copolymer resin and (C) bondable glass fibers into a mold in a steam molding process, followed by releasing the plastic member at 30°C to 90°C; and coupling the plastic member to a stainless steel (SUS) frame.

In one embodiment, the steam molding process may be rapid heat cycle molding (RHCM). RHCM is performed by heating a mold to a temperature of a glass transition temperature (Tg) or more of a resin using steam, and then injecting a resin composition into the heated mold, followed by releasing a plastic member formed by curnig the injected resin composition at 30°C to 90°C. Although cycle time of overall processes may be reduced by decreasing cooling time of the plastic member in preparation of a television housing, the plastic member can suffer from whitening due to an ejector pin upon release. However, when the plastic member according to the invention is used, the plastic member can prevent whitening due to an ejector pin.

A preparation method of a television housing including RHCM may be easily performed by those skilled in the art.

Hereinafter, the present invention will be described in more detail with reference to some examples. However, it should be understood that these examples are provided for illustration only and are not to be in any way construed as limiting the present invention.

### EXAMPLES

Details of components used in Examples and Comparative Examples are as follows:
(A) Polycarbonate resin
   *PC-1: Polycarbonate resin (Cheil Industries Inc.) having a melt index (300°C, 1.2 kg) of 20 g/10 min as measured in accordance with ISO 1133
   *PC-2: Polycarbonate resin (Cheil Industries Inc.) having a melt index (300°C, 1.2 kg) of 62 g/10 min as measured in accordance with ISO 1133
(B) Rubber-modified aromatic vinyl graft copolymer resin
   (B1) g-ABS: g-ABS (CHPC, Cheil Industries Inc.), in which an acrylonitrile-styrene copolymer having a weight ratio (SM/AN) of styrene monomer/acrylonitrile of 71/29 was grafted to a polybutadiene rubber (PBR) having a 45 wt% Z-average of 310 nm
   (B2) SAN: SAN resin (styrene acrylonitrile copolymer) having MI of 5 g/10 min (200°C, 5 kg) and a weight average molecular weight (Mw) of 150,000 g/mol and including 24 wt% of acrylonitrile

### Examples 1 to 3 and Comparative Example 1

A polycarbonate resin, a rubber-modified aromatic vinyl graft copolymer resin and bondable glass fibers were mixed in a composition as listed in Table 1, followed by adding 15.5 parts by weight of BDP (Bisphenol A bis(diphenyl phosphate), Daihachi Co., Ltd.) to the mixture as a flame retardant based on 100 parts by weight of the mixture, thereby preparing a resin composition. Next, the resin composition was subjected to extrusion at 250°C using a twin-screw extruder having a diameter of 45 mm and 36 L/D, thereby preparing pellets. The prepared pellets were injected into a mold heated in the same manner as in RHCM, followed by cooling to 70°C and releasing a molded product using an ejector pin, thereby preparing a plastic member.

**Table 1**

| | Example 1 | Example 2 | Example 3 | Comparative Example 1 |
|---|---|---|---|---|
| PC-1 (wt%) | 30 | 30 | 30 | 30 |
| PC-2 (wt%) | 40 | 40 | 40 | 40 |
| g-ABS (wt%) | 8 | 8 | 8 | 8 |
| SAN (wt%) | 5 | 5 | 5 | 5 |
| Glass fiber (wt%) | 17 | 17 | 17 | 17 |
| Cross-sectional shape of glass fiber | Round | Round | Round | Round |
| Size of glass fiber (Length/Diameter) | 3 mm/13 µm | 3 mm/10 µm | 3 mm/13 µm | 3 mm/13 µm |
| Coating material for glass fiber | Epoxy | Urethane | Silane | - |
| GF Maker | KCC | Nittobo | Owenscorning | Nittobo |
| Grade Name | CS321-EC10-3 | ECS 03T-187H | 183F | CSF 3PE-936S |

### Experimental Example

The pellets prepared by extrusion in Examples 1 to 3 and Comparative Example 1 were dried at 80°C for 4 hours, followed by molding at 250°C to 280°C and at a mold temperature of 60°C to 150°C using a 6-oz injection machine, thereby preparing specimens. Properties of the specimens were evaluated by the following methods. Results are shown in Table 2.

### Property Evaluation

(1) Tensile strength (unit: kgf/cm²): Tensile strength was measured at 23°C in accordance with ASTM D638 (kgf/cm²×0.098=MPa).
(2) Tensile elongation (unit: %): Tensile elongation was measured in accordance with ASTM D638.
(3) Izod impact strength (unit: kgf·cm/cm): Izod impact strength was measured on a notched Izod specimen at room temperature in accordance with ASTM D256 (1/8", notched).
(4) Flame retardancy: Flame retardancy was measured on a 1.5 mm thick specimen according to the UL-94 VB test method.
(5) Ejector pin whitening: The prepared plastic member was released by 10 ejector pins at 70°C. The number of whitening marks (ejector pin whitening marks) caused by the 10 ejector pins upon release was observed by the naked eye, and the plastic member was evaluated according to the following grades:
1: number of whitening makrs from 10 to 8; 2: number of whitening marks from 7 to 5; 3: number of whitening marks from 4 to 2; and 4: number of whitening marks from 1 to 0.

**Table 2**

| | Example 1 | Example 2 | Example 3 | Comparative Example 1 |
|---|---|---|---|---|
| Tensile strength (TS) | 1195 | 958 | 1179 | 661 |
| Tensile elongation (TE) | 5.1 | 5.4 | 5.2 | 5.0 |
| Izod impact strength | 5.6 | 5.1 | 5.7 | 5.4 |
| Flame retardancy | V-1 | V-1 | V-1 | V-1 |
| Ejector pin whitening | 4 | 4 | 4 | 1 |

From the results of Table 2, it could be seen that the plastic members (Examples 1 to 3) according to the invention using bondable glass fibers exhibited extremely excellent tensile strength without deterioration of flame retardancy, stiffness and the like, and substantially did not suffer from substantial whitening due to the ejector pins even at 70°C.

Conversely, it could be seen that the plastic member of Comparative Example 1 suffered from whitening due to the ejector pins upon release at high temperature, and deteriorated in tensile strength.

That is, it can be seen that the plastic member according to the invention can prevent whitening due to an ejector pin even upon release at high temperature, and thus can exhibit outstanding external appearance while reducing process time for preparation of a television housing.

## Claims

1. A television housing having a structure comprising:
a stainless steel (SUS) frame; and
a plastic member adjoining at least one surface of the stainless steel frame,
wherein the plastic member comprises a base resin comprising 60 wt% to 95 wt% of (A) a polycarbonate resin; and 5 wt% to 40 wt% of (B) a rubber-modified aromatic vinyl graft copolymer resin; and 5 parts by weight to 25 parts by weight of (C) bondable glass fibers based on 100 parts by weight of the base resin including the (A) polycarbonate resin and the (B) rubber-modified aromatic vinyl graft copolymer resin,
wherein the plastic member has a tensile strength from 70 MPa to 130 MPa at 23°C, as measured on a tensile test specimen under conditions of 50 mm/min in accordance with ASTM D638.

2. The television housing according to claim 1, wherein the plastic member is molded by a steam molding process.

3. The television housing according to claim 1 or 2, wherein the steam molding process is rapid heat cycle molding (RHCM).

4. The television housing according to any of claims 1 to 3, wherein the bondable glass fibers are coated with a resin comprising at least one of epoxy, urethane, and silane resins.

5. The television housing according to any of claims 1 to 4, wherein the plastic member further comprises at least one of a phosphorus flame retardant and a halogen flame retardant.

6. The television housing according to any of claims 1 to 5, wherein the plastic member further comprises at least one of impact reinforcing agents, anti-dripping agents, antimicrobials, heat stabilizers, antioxidants, release agents, light stabilizers, inorganic additives, surfactants, plasticizers, lubricants, antistatic agents, and colorants.

7. A method of fabricating a television housing, comprising:
preparing a plastic member by injection of (A) a polycarbonate resin, (B) a rubber-modified aromatic vinyl graft copolymer resin and (C) bondable glass fibers into a mold in a steam molding process, followed by releasing the plastic member at 30°C to 90°C; and
coupling the plastic member to a stainless steel (SUS) frame.

8. The method according to claim 7, wherein the plastic member has a tensile strength from 70 MPa to 130 MPa at 23°C, as measured on a tensile test specimen under conditions of 50 mm/min in accordance with ASTM D638.

9. The method according to claim 7 or 8, wherein the steam molding process is rapid heat cycle molding (RHCM).

## Patentansprüche

1. Fernsehergehäuse mit einer Struktur, umfassend:
einen Edelstahl(SUS)-Rahmen; und
ein an wenigstens eine Oberfläche des Edelstahlrahmens angrenzendes Kunststoffelement,
wobei das Kunststoffelement ein Grundharz umfasst, welches umfasst 60 Gew.-% bis 95 Gew.-% eines (A) Polycarbonats; und 5 Gew.-% bis 40 Gew.-% eines (B) kautschukmodifizierten aromatischen Vinyl-Pfropf-Copolymer-Harzes; und 5 Gewichtsteile bis 25 Gewichtsteile von (C) bondbaren Glasfasern, bezogen auf 100 Gewichtsteile des Grundharzes, einschließlich des (A) Polycarbonatharzes und des (B) kautschukmodifizierten aromatischen Vinyl-Pfropf-Copolymer-Harzes,
wobei das Kunststoffelement eine Zugfestigkeit von 70 MPa bis 130 MPa bei 23° C bei Messung an einem Zugprüfkörper unter Bedingungen von 50 mm/Min. gemäß ASTM D638 aufweist.

2. Fernsehergehäuse nach Anspruch 1, wobei das Kunststoffelement durch einen Dampf-Formgebungsprozess geformt ist.

3. Fernsehergehäuse nach Anspruch 1 oder 2, wobei der Dampf-Formgebungsprozess ein Schnell-Erwärmungs-Zyklus-Formen (RHCM; *Rapid Heat Cycle Molding)* ist.

4. Fernsehergehäuse nach irgendeinem der Ansprüche 1 bis 3, wobei die bondbaren Glasfasern mit einem Harz beschichtet sind, welches wenigstens eines von Epoxy-, Urethan-, und Silanharzen umfasst.

5. Fernsehergehäuse nach irgendeinem der Ansprüche 1 bis 4, wobei das Kunststoffelement weiterhin wenigstens eines von einem Phosphor-Flammschutzmittel und einem Halogen-Flammschutzmittel umfasst.

6. Fernsehergehäuse nach irgendeinem der Ansprüche 1 bis 5, wobei das Kunststoffelement weiterhin wenigstens eines von schlagzähigkeitsverstärkenden Mitteln bzw. Schlag oder Aufprall verstärkenden Mitteln, Antitropfmitteln, antimikrobiellen Mitteln, Wärmestabilisatoren, Antioxidationsmitteln, Trennmitteln, Lichtstabilisatoren, anorganischen Additiven, oberflächenaktiven Mitteln, Weichmachern, Schmiermitteln bzw. Gleitmitteln, antistatischen Mitteln, und Farbstoffen umfasst.

7. Verfahren zur Herstellung eines Fernsehergehäuses, umfassend:
Herstellen eines Kunststoffelements durch Spritzgießen eines (A) Polycarbonatharzes, eines (B) kautschukmodifizierten aromatischen Vinyl-Pfropf-Copolymer-Harzes und (C) bondbaren Glasfasern in eine Form in einem Dampf-Formgebungsprozess, gefolgt vom Lösen des Kunststoffelements bei 30° C bis 90° C; und
Koppeln des Kunststoffelements an einen Edelstahl(SUS)-Rahmen.

8. Verfahren nach Anspruch 7, wobei das Kunststoffelement eine Zugfestigkeit von 70 MPa bis 130 MPa bei 23° C bei Messung an einem Zugprüfkörper unter Bedingungen von 50 mm/Min. gemäß ASTM D638 aufweist.

9. Verfahren nach Anspruch 7 oder 8, wobei der Dampf-Formgebungsprozess ein Schnell-Erwärmungs-Zyklus-Formen (RHCM; *Rapid Heat Cycle Molding)* ist.

## Revendications

1. Boîtier de téléviseur ayant une structure comprenant :
un cadre en acier inoxydable (SUS) ; et
un élément plastique attenant à au moins une surface du cadre en acier inoxydable,
l'élément plastique comprenant une résine de base comprenant 60 % en poids à 95 % en poids de (A) une résine de polycarbonate ; et 5 % en poids à 40 % en poids de (B) une résine copolymère à greffage vinylaromatique modifié par un caoutchouc ; et 5 parties en poids à 25 parties en poids de (C) des fibres de verre pouvant être collées, pour 100 parties en poids de la résine de base comprenant (A) la résine de polycarbonate et (B) la résine d'un copolymère à greffage vinylaromatique modifié par un caoutchouc,
l'élément plastique ayant une résistance à la traction de 70 MPa à 130 MPa à 23°C, telle que mesurée sur une éprouvette pour essai de traction dans des conditions correspondant à 50 mm/min selon ASTM D638.

2. Boîtier de téléviseur selon la revendication 1, dans lequel l'élément plastique est moulé par un procédé de moulage à la vapeur.

3. Boîtier de téléviseur selon la revendication 1 ou 2, dans lequel le procédé de moulage à la vapeur est un moulage à cycle thermique rapide (RHCM).

4. Boîtier de téléviseur selon l'une quelconque des revendications 1 à 3, dans lequel les fibres de verre pouvant être collées sont revêtues d'une résine comprenant au moins l'une d'une résine époxy, d'une résine d'uréthanne et d'une résine de silane.

5. Boîtier de téléviseur selon l'une quelconque des revendications 1 à 4, dans lequel l'élément plastique comprend en outre au moins l'un d'un retardateur de flamme phosphoré et d'un retardateur de flamme halogéné.

6. Boîtier de téléviseur selon l'une quelconque des revendications 1 à 5, dans lequel l'élément plastique comprend en outre au moins l'un d'agents de renforcement de la résistance au choc, d'agents anti-goutte, d'antimicrobien, de stabilisants à la chaleur, d'antioxydants, d'agents de démoulage, de photo-stabilisants, d'additifs inorganiques, de tensioactifs, de plastifiants, de lubrifiants, d'agents antistatiques et de substances colorantes.

7. Procédé de fabrication d'un boîtier de téléviseur, comprenant :
la préparation d'un élément plastique par injection de (A) une résine de polycarbonate, (B) une résine copolymère à greffage vinylaromatique modifié par un caoutchouc et (C) des fibres de verre pouvant être collées, dans un moule dans un procédé de moulage à la vapeur, suivie du démoulage de l'élément plastique à 30 à 90°C ; et
le couplage de l'élément plastique à un cadre en acier inoxydable (SUS).

8. Procédé selon la revendication 7, dans lequel l'élément plastique a une résistance à la traction de 70 MPa à 130 MPa à 23°C, telle que mesurée sur une éprouvette pour essai de traction dans des conditions correspondant à 50 mm/min selon ASTM D638.

9. Procédé selon la revendication 7 ou 8, dans lequel le procédé de moulage à la vapeur est un moulage à cycle thermique rapide (RHCM).
